(19) Europäisches Patentamt
European Patent Office
Office européen des brevets

(11) **EP 2 275 833 A1**

(12) **EUROPEAN PATENT APPLICATION**

(43) Date of publication:
**19.01.2011 Bulletin 2011/03**

(51) Int Cl.:
*G01S 7/497* [(2006.01)]    *G01S 17/89* [(2006.01)]

(21) Application number: **09164260.3**

(22) Date of filing: **01.07.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br><br>(71) Applicant: **IEE International Electronics & Engineering S.A.R.L.**<br>**6468 Echternach (LU)** | (72) Inventors:<br> • **Franke, Michael**<br>   **01127 Dresden (DE)**<br> • **Mirbach, Bruno**<br>   **54329 Konz (DE)**<br> • **Lamesch, Laurent**<br>   **4881 Lamadelaine (LU)**<br><br>(74) Representative: **Office Freylinger**<br>   **P.O. Box 48**<br>   **8001 Strassen (LU)** |

(54) **Range camera and range image acquisition method**

(57)     For acquiring a 3-D image of a scene, the scene is illuminated with modulated light emitted by an illumination unit and imaged onto an array of lock-in pixels. The previously emitted light after impinges on the lock-in pixels after it has been scattered or reflected in the scene. One measures the modulation phase, the modulation amplitude and the background level of the light impinging on each of the lock-in pixels. Range information of the scene is computed based upon the measured modulation phase. Computing the range information comprises determining the ratio between the background level and the modulation amplitude of the light detected at the lock-in pixels, mapping the ratio onto a phase measurement error using a predetermined calibration function and compensating for the phase measurement error in the computed range information.

**Fig. 2**

**Description**

**Technical field**

The present invention relates to a range camera operating according to the time-of-flight principle and to a method for acquiring a range image using such camera.

**Background Art**

Systems for creating a 3-D representation of a given portion of space have a variety of potential applications in many different fields. Examples are automotive sensor technology (e.g. vehicle occupant detection and classification), robotic sensor technology (e.g. object identification) or safety engineering (e.g. plant monitoring) to name only a few. As opposed to conventional 2-D imaging, a 3-D imaging system requires depth information about the target scene. In other words, the distances between one or more observed objects and an optical receiver of the system need to be determined. A well-known approach for distance measurement, which is used e.g. in radar applications, consists in timing the interval between emission and echo-return of a measurement signal. This so called time-of-flight (TOF) approach is based on the principle that, for a signal with known propagation speed in a given medium, the distance to be measured is given by the product of the propagation speed and the time the signal spends to travel back and forth.

In case of optical imaging systems, the measurement signal consists of light waves. For the purposes of the present description, the term "light" is to be understood as including visible, infrared (IR) and ultraviolet (UV) light.

Distance measurement by means of light waves generally requires varying the intensity of the emitted light in time. The TOF method can e.g. be implemented using the phase-shift technique or the pulse technique. With the phase-shift technique, the amplitude of the emitted light is periodically modulated (e.g. by sinusoidal modulation) and the phase of the modulation at emission is compared to the phase of the modulation at reception. With the pulse technique, light is emitted in discrete pulses without the requirement of periodicity. In phase-shift measurements, the modulation period is typically in the order of twice the difference between the maximum measurement distance and the minimum measurement distance divided by the velocity of light. In this approach, the propagation time interval is determined as phase difference by means of a phase comparison between the emitted and the received light signal. Such phase comparison requires synchronization of the demodulation signal with the emitted light signal. Due to the high propagation speed given by the velocity of light, a fundamental difficulty encountered in distance measurements based on the pulse technique or the phase-shift technique resides in the required temporal resolution of the measurement device. In fact, a spatial resolution in the order of centimetres requires a temporal resolution in the order of $10^{-11}$ seconds (10 ps). The principles of range imaging based upon time-of-flight measurements are described in detail in EP 1 152 261 A1 (to Lange and Seitz) and WO 98/10255 (to Schwarte). A more detailed description of the technique can be found in Robert Lange's doctoral thesis "3D Time-of-Flight Distance Measurement with Custom Solid-State Image Sensors in CMOS/CCD-Technology" (Department of Electrical Engineering and Computer Science at University of Siegen). A method of operating a time-of-flight imager pixel that allows detecting of saturation is disclosed in WO 2007/014818 A1.

Figure 1 depicts a range camera 100 according to the prior art (see e.g. WO 2006/097406 A2 for reference). Signal source 101 generates a modulation signal 102 on its output node. Illumination driver 103 amplifies the modulation signal to drive the illumination module 105 consisting of several individual light emitting devices 151. The illumination module emits an intensity-modulated light wave 106, which is directed into the scene to be imaged. Object 107 in the scene scatters part of the light back onto the array 112 of lock-in pixel sensor cells 152 (hereinafter referred to as lock-in pixels, to shorten the notation). Each lock-in pixel 152 is at the same time fed with a demodulation signal 110, which is derived from the modulation signal 102 by the photo gate driver 109. Under the control of the demodulation signal 110, each lock-in pixel 152 integrates the charge generated therein by the impinging light during at least three time intervals, each of which corresponds to a different phase within one period of the modulation signal. Each lock-in pixel 152 provides response signals 113 indicating the integrated charge for the different time intervals. This raw phase information is sometimes referred to as "tap values" or "tap responses" according to the nomenclature of Robert Lange's doctoral thesis. To simplify computation of the phase difference between the received light and the modulation signal, one normally chooses four integration intervals corresponding to phases separated by 90˚. For each pixel, one thus retrieves four tap values (called A0, A1, A2, A3 from now on) per picture taken. The tap values are converted into phase information 115 by the phase calculation unit 114. With four tap values, the phase difference φ is calculated as follows:

$$\varphi = \operatorname{atan2}(A3 - A1, A2 - A0) \qquad \text{(eqn. 1)}$$

where atan2(x,y) is the four-quadrant inverse tangent function, yielding the angle between the positive x-axis of a plane and the point with coordinates (x, y) on that plane. For offset compensation, the range camera comprises a reference lock-in pixel 153 receiving the modulated light from the illumination module 105 via a reference light path (provided by light guide 117). As the length of the reference light path is known, the phase difference computed with the tap responses from the reference lock-in pixel can be used to determine a global offset (i.e. common to all lock-in pixels). Phase drifts due to ageing of the illumination unit or to changing ambient temperature can thus be compensated. Calculation unit 114 is preferably a digital circuit, for example a digital ASIC (application specific integrated circuit) or an FPGA (field programmable gate array). Control unit 116, which is preferably a microcontroller, processes the distance information further to, for example, extract object characteristics.

WO 2006/056530 A1 discloses an error compensation method for a 3D camera, wherein four tap responses are retrieved for each integration interval (i.e. 16 per 3D image taken) and the distance is calculated based upon all the tap values in a manner that eliminates gain and offset errors.

**Technical problem**

It is an object of the present invention to provide for alternative or additional error compensation in a range camera operating according to the time-of-flight principle. This object is achieved by a method as claimed in claim 1 and the range camera as claimed in claim 8.

**General Description of the Invention**

For acquiring a 3-D image of a scene, the scene is illuminated with modulated light emitted by an illumination unit and imaged onto an array of lock-in pixels. The previously emitted light impinges on the lock-in pixels after it has been scattered or reflected by an object or a living being in the scene. One measures the modulation phase, the modulation amplitude and the background level of the light impinging on each of the lock-in pixels. We herein use the term modulation phase to designate the phase of the modulation and to avoid confusion with the phase of the electromagnetic carrier wave. Range information of the scene is computed based upon the measured modulation phase. This means that for each lock-in pixel, one determines the distance from the lock-in pixel array to the part of the scene imaged on that pixel by exploiting the relationship between the measured modulation phase and the distance and/or time the light has travelled. If the exact value of the modulation phase could be measured, the relationship between the measured modulation phase and the distance would be linear:

$$d = \frac{c\varphi}{4\pi \ f} + d_0 \qquad\qquad \text{(eqn. 2)}$$

where d represents the distance, $\varphi$ the measured modulation phase, c the speed of light, f the frequency of the modulation and $d_0$ an offset common to all lock-in pixels. It should be noted that the light travels the distance forth and back.

According to the invention, computing the range information comprises determining the ratio between the background level and the modulation amplitude of the light detected at the lock-in pixels, mapping the ratio onto a phase measurement error using a predetermined calibration function and compensating for the phase measurement error in the computed range information. The present method thus takes into account that the measured modulation phase may contain defects resulting from imperfections in the processing chain that converts the incoming light into electric charge and further converts the electric charge into voltage. It is the inventors' merit to have recognized that efficient error compensation can be carried out on the basis of the background-to-amplitude ratio.

The predetermined calibration function may be implemented with a look-up table. Alternatively, the calibration function could also be implemented with a polynomial approximation, which maps the background-to-amplitude ratio onto a corresponding phase measurement error.

According to an embodiment of the invention, an oscillating modulation signal is fed to the illumination unit to cause the illumination unit to emit the intensity-modulated light, and the step of measuring the modulation phase comprises:

    ○ integrating electric charge induced by the impinging light during at least a first, a second and a third time interval corresponding to at least a first, a second and a third phase of the modulation signal, respectively;

    ○ providing a set of response signals (the so-called tap responses) containing at least a first, a second and a third response signal indicative of the charge integrated during the corresponding one of the at least first, second and third time intervals;

○ deriving the modulation phase from the set of response signals, the modulation phase being indicative of a phase difference between the impinging light and the modulation signal.

Those skilled will note that at least three tap responses per picture are necessary to unambiguously derive the modulation phase, the modulation amplitude and the background level. According to the most preferred embodiment of the invention, one however uses four tap responses associated with four phases regularly distributed over the modulation period. In this case, measuring the modulation phase comprises

○ integrating electric charge induced by the impinging light during a first, a second, a third and a fourth time interval corresponding to a first, a second, a third and a fourth phase of the modulation signal, respectively, the first, second, third and fourth phases satisfying the relationship:

$$\varphi_3 = \varphi_2 + \pi/2 = \varphi_1 + \pi = \varphi_0 + 3\pi/2 \qquad \text{(eqn. 3)}$$

where $\varphi_0$, $\varphi_1$, $\varphi_2$ and $\varphi_3$ represent the first, second, third and fourth phase in radians, respectively;

○ providing a set of response signals containing a first, a second, a third and a fourth response signal indicative of the charge integrated during the corresponding one of the first, second, third and fourth time intervals;

○ deriving the modulation phase from the set of response signals based upon the relationship expressible as:

$$\varphi = \text{atan2}\left(A3 - A1, A2 - A0\right) \qquad \text{(eqn. 1)}$$

where $\varphi$ again represents the modulation phase, and where A0, A1, A2 and A3 represent the first, second, third and fourth response signal, respectively.

The modulation amplitude and/or the background level may be derived from the set of response signals. In the case of the four tap responses A0, A1, A2 and A3, the modulation amplitude may be calculated with the formula:

$$A = K_A * \sqrt{\left(A3 - A1\right)^2 + \left(A2 - A0\right)^2} \qquad \text{(eqn. 4)}$$

where A represents the modulation amplitude, and $K_A$ is a proportionality constant, which depends upon the specific configuration of the lock-in pixels. The background level may be computed as:

$$B = K_B * \left(A0 + A1 + A2 + A3\right) \qquad \text{(eqn. 5)}$$

where B represents the background level, and $K_B$ is another proportionality constant, which also depends upon the specific configuration of the lock-in pixels.
Most preferably, the modulation phase, the modulation amplitude and the background level are measured individually for each of the lock-in pixels and the range information is individually computed for each of the lock-in pixels. Accordingly, an individual error compensation may be carried out for each lock-in pixel.
Another aspect of the present invention concerns a range camera, configured to operate according to the time-of-flight principle, which implements the error compensation method described hereinbefore. Such camera comprises:

○ an illumination unit configured to illuminate the scene with intensity-modulated light;
○ an oscillator operatively connected to the illumination unit for feeding an oscillating modulation signal to the illumination unit;
○ an array of lock-in pixels;

○ an optical system for imaging the scene onto the array of lock-in pixels and causing light scattered in the scene to impinge on the lock-in pixels;

○ a driver module operatively connected to the array of lock-in pixels to control each lock-in pixel to integrate charge induced therein by the impinging light during at least a first, a second and a third time interval corresponding to at least a first, a second and a third phase of the modulation signal, respectively, and to provide a set of response signals (tap responses) containing at least a first, a second and a third response signal indicative of the charge integrated during the corresponding one of the at least first, second and third time intervals; and

○ a processing unit configured to derive a modulation phase, a modulation amplitude and a background level of the light impinging on each of the lock-in pixels based upon the set of response signals;

○ the processing unit being further configured to compute range information of the scene based upon the measured modulation phase and to output the computed range information;

The processing unit is configured to determine the ratio between the background level and the modulation amplitude of the light detected at each lock-in pixel, to map the ratio onto the phase measurement error using the predetermined calibration function and to compensate for the phase measurement error in the computed range information. The processing unit may have the calibration function implemented therein as a look-up table function. Alternatively, the calibration function could also be implemented with a polynomial approximation.

Preferably, the driver module is configured to control each lock-in pixel to integrate charge induced therein by the impinging light during a first, a second, a third and a fourth time interval corresponding to a first, a second, a third and a fourth phase of the modulation signal, respectively, and to provide a set of response signals containing the first, second, third and fourth response signal. The first, second, third and fourth phases preferably satisfy equation 2, so that the modulation phase can be derived from the set of response signals based on equation 3.

**Brief Description of the Drawings**

Further details and advantages of the present invention will be apparent from the following detailed description of not limiting embodiments with reference to the attached drawings, wherein:

Fig. 1 is a schematic illustration of a range camera according to the prior art, already discussed beforehand;

Fig. 2 is a schematic illustration of a range camera according to a preferred embodiment of the invention;

Fig. 3 is a graph representing a possible relationship between the phase measurement error and the background-to-amplitude ratio;

Fig. 4 is a schematic illustration of a variant of the range camera of Fig. 2.

**Description of Preferred Embodiments**

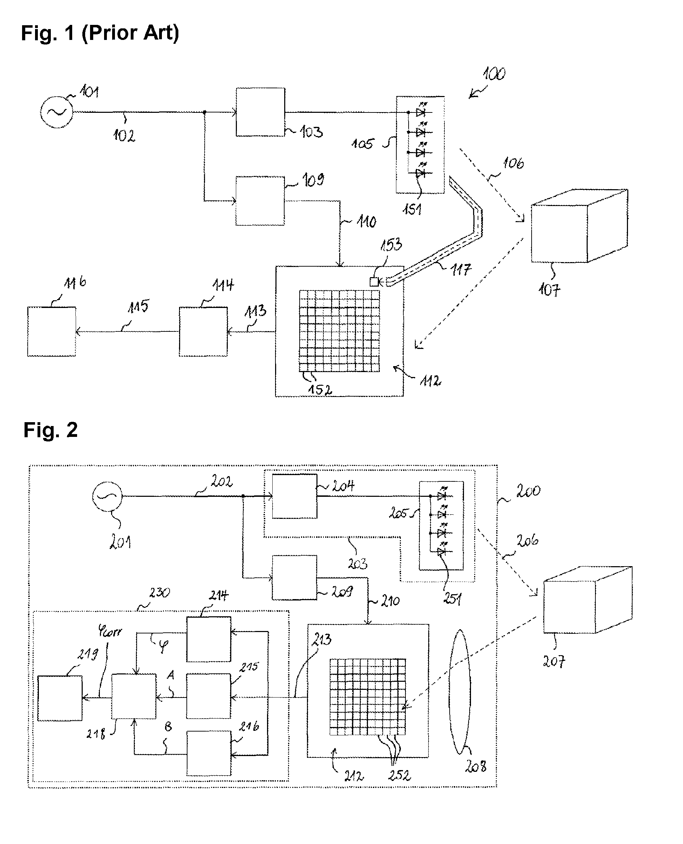

Fig. 2 schematically shows a range camera 200 according to a preferred embodiment of the invention. The range camera 200 comprises an oscillator 201, which generates a sinusoidal modulation signal 202 on its output node. The output node of the oscillator 201 is connected to illumination unit 203, comprising an LED driver 204 and an array 205 of LEDs 251. The LED driver 204 amplifies the modulation signal 202 to drive the LEDs 251. When receiving the oscillating modulation signal, the illumination unit 203 emits an intensity-modulated light wave 206 into the scene to be imaged.

The range camera 200 further comprises an array 212 of lock-in pixels 252 and an optical system (illustrated by lens 208) that images the scene onto that array 212. Object 207 in the scene scatters part of the intensity-modulated light back onto the array 212 of lock-in pixels 252. The intensity of the light impinging on each lock-in pixel 252 is modulated in time with the same frequency as the emitted light with the phase however retarded by a value φ proportional to the distance between that pixel and the part of the scene that is imaged thereon. Mathematically, the received light intensity can thus be expressed as

$$I(n,t) = B(n) + A(n)\sin(\omega t - \varphi(n))$$

where I represents the light intensity, B the background level, A the modulation amplitude, φ the modulation phase (i.e. the phase difference between the modulation of the emitted light and the modulation of the received light), t the time variable, w the angular frequency of the modulation and n a pixel index. Quantities A, B and φ are not known from the beginning but have to be determined.

Each lock-in pixel 252 thus receives light from a part of the scene imaged thereon by the optical system 208. Each lock-in pixel 252 is at the same time fed with a demodulation signal 210, which is provided by photo gate driver 209 (driver module). Each lock-in pixel 252 integrates the charge generated therein by the impinging light during four time intervals of equal lengths, corresponding to four different phases within one period of the modulation signal. These four phases are spaced by 90˚. Each lock-in pixel 252 provides response signals 213 (tap responses A0, A1, A2, A3) indicating the integrated charge for the different time intervals.

The response signals 213 are fed to a processing unit 230, which comprises a phase calculation module 214, an amplitude calculation module 215, a background calculation module 216, an error compensation module 218 and an image analyser 219. The processing unit 213 is preferably a digital circuit, for example a digital ASIC (application specific integrated circuit), an FPGA (field programmable gate array), a microprocessor or the like. It should be noted that the different modules 214, 215, 216, 218 and 219 need not be present in the processing unit 230 as separate electronic entities. Some or all of these modules may indeed be integrated in a common circuit.

Phase calculation module 214 of processing unit 230 maps each set of tap responses A0-A3 onto the modulation phase using the function:

$$(A0, A1, A2, A3) \mapsto \varphi(A0, A1, A2, A3) = \mathrm{atan2}(A3 - A1, A2 - A0),$$

which is just another way to express equation 1.

Amplitude calculation module 215 computes the amplitude A of the modulation of the received light using tap responses A0, A1, A2, A3 as follows:

$$(A0, A1, A2, A3) \mapsto A(A0, A1, A2, A3) = K_A * \sqrt{(A3 - A1)^2 + (A2 - A0)^2}$$

where $K_A$ is a constant factor, which depends on the specific implementation of the lock-in pixels 252. It is stored as constant in the processing unit 230 or amplitude calculation module 215. Amplitude A is available on the output of the amplitude calculation module 215.

Background calculation module 216 calculates the background level B of the received light wave using the function:

$$(A0, A1, A2, A3) \mapsto B(A0, A1, A2, A3) = K_B * (A0 + A1 + A2 + A3)$$

where $K_B$ is a constant factor, which depends on the specific implementation of the lock-in pixels 252. It is stored as constant in the processing unit 230 or background calculation module 216. Background level B is available on the output of the background calculation module 216.

Phase error correction module 218 combines the modulation phase output by phase calculation module 214, the modulation amplitude output by amplitude calculation module 215, the background level output by background calculation module 216 to determine a phase measurement error and output a corrected modulation phase. The phase correction module 218 computes the ratio of the background level and the modulation amplitude B/A and maps that ratio onto a phase measurement error using a predetermined calibration function:

$$B/A \mapsto f(B/A) = \varphi errfit(B/A)$$

In a further step, the phase error correction module 218 calculates a corrected phase φcorr by subtracting the estimated phase measurement error φerrfit from the (uncorrected) measured modulation phase φ available on the output of phase calculation module 214:

$$\varphi corr = \varphi - \varphi errfit$$

The corrected modulation phase φcorr represents range information (expressed in radians) because it corresponds to a distance according to the formula:

$$d = \frac{c\varphi corr}{4\pi \ f} + d_0$$

where d is the distance (in units of length), c the speed of light, f the frequency of the modulation and $d_0$ an offset common to all lock-in pixels. The corrected modulation phase φcorr or the corresponding distance d is fed to the image analyser 219, which processes the range information of the entire lock-in pixel array 212, e.g. to extract object characteristics and/or to display the range image on a display unit operatively connected to the range camera 200.

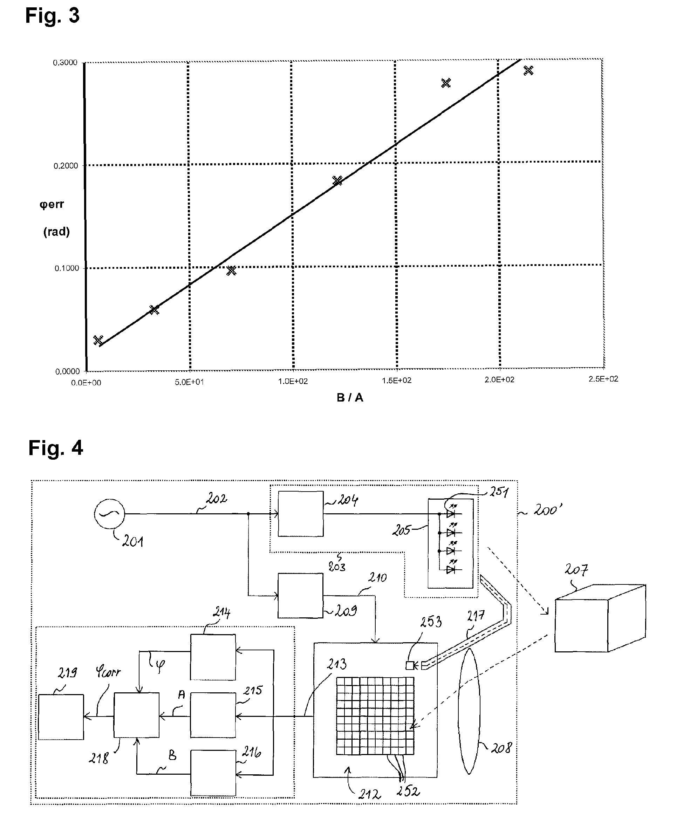

Fig. 3 shows the phase measurement error (in radians) as a function of the background-to-amplitude ratio B/A. The crosses in the graph show the phase measurement error of six different individual measurements made with a range camera 200 with phase error compensation inactive. The continuous line represents a first order polynomial fit to the measured data. The corresponding polynomial equation is in this case: φerrfit = 0.0014 · (B/A) + 0.0161.

To determine the calibration function, one measures and records the phase measurement error for a plurality of different background-to-amplitude ratios B/A. Then, a general equation is fit to the recorded data (using e.g. a least squares algorithm), for example a first order polynomial equation as described above. This equation yields the calibration function f as an approximation of the relationship between the ratio B/A the corresponding phase measurement error: φerrfit = f(B/A).

This calibration procedure can be performed once on a single specimen of a time-of-flight range camera in order to find the parameters of the calibration function f. These parameters can then be applied to all other copies of that specimen that are identical in construction and belong to the same production batch. This inexpensive approach would be most suitable for mass production. Alternatively, each produced range camera could be subjected to its individual calibration procedure. This approach would be necessary in case batch-wise calibration should turn out not to meet predetermined quality requirements.

It should be noted that instead of using an equation for the approximation of the relationship between ratio B/A and phase measurement error, a look up table can be used. Such look-up table could contain a number of recorded ratios B/A having the corresponding phase measurement errors associated therewith. In this case, the calibration function would not be based upon a polynomial expression but on the look-up table, possibly accompanied with an interpolation process to interpolate between the discrete steps of the look-up table.

Fig. 4 shows a variant 200' of the range camera 200 which allows for global offset compensation as described above. This variant comprises one or more reference lock-in pixels 253 and a light guide 217 guiding light from the plurality of LEDs of the illumination unit 203 to the reference pixels 253. The light guide 217 defines a light path of a known length. Accordingly, the phase information retrieved by means of the reference lock-in pixels 253 serves as a phase reference defining a phase offset common to the modulation phases of all lock-in pixels of pixel array 212 (see also WO2008/034738 A1). The signals from the reference lock-in pixels 253 are treated in the same way as those from the other pixels 252. The other components of this variant of the range camera operate essentially in the way described before.

**Claims**

1. A method of acquiring a range image of a scene, comprising illuminating said scene with intensity-modulated light emitted at an illumination unit;
   imaging said scene onto an array of lock-in pixels and causing light scattered in said scene to impinge on said lock-in pixels;
   measuring a modulation phase, a modulation amplitude and a background level of the light detected at each of said lock-in pixels;
   computing range information of said scene based upon said measured modulation phase; and
   outputting said computed range information;
   **characterised in that**
   computing said range information comprises determining a ratio between the background level and the modulation amplitude of the light detected at said lock-in pixels, mapping said ratio onto a phase measurement error using a predetermined calibration function and compensating for said phase measurement error in said computed range information.

2. The method according to claim 1, wherein said calibration function is implemented with a look-up table.

3. The method according claim 1 or 2,
wherein an oscillating modulation signal is fed to said illumination unit to cause said illumination unit to emit said intensity-modulated light,
wherein measuring said modulation phase comprises
integrating electric charge induced by said impinging light during at least a first, a second and a third time interval corresponding to at least a first, a second and a third phase of said modulation signal, respectively;
providing a set of response signals containing at least a first, a second and a third response signal indicative of the charge integrated during the corresponding one of said at least first, second and third time intervals; deriving the modulation phase from the set of response signals, said modulation phase being indicative of a phase difference between the impinging light and said modulation signal.

4. The method according claim 1 or 2,
wherein an oscillating modulation signal is fed to said illumination unit to cause said illumination unit to emit said intensity-modulated light,
wherein measuring said modulation phase comprises
integrating electric charge induced by said impinging light during a first, a second, a third and a fourth time interval corresponding to a first, a second, a third and a fourth phase of said modulation signal, respectively, said first, second, third and fourth phases satisfying the relationship:

$$\varphi_3 = \varphi_2 + \pi/2 = \varphi_1 + \pi = \varphi_0 + 3\pi/2$$

where $\varphi_0$, $\varphi_1$, $\varphi_2$ and $\varphi_3$ represent said first, second, third and fourth phase in radians, respectively; providing a set of response signals containing a first, a second, a third and a fourth response signal indicative of the charge integrated during the corresponding one of said first, second, third and fourth time intervals; deriving the modulation phase from the set of response signals based upon a relationship expressible as:

$$\varphi = \mathrm{atan2}\left(A3 - A1, A2 - A0\right)$$

where $\varphi$ represents said modulation phase, and where A0, A1, A2 and A3 represent said first, second, third and fourth response signal, respectively.

5. The method according to claim 3 or 4, wherein measuring said modulation amplitude comprises deriving the modulation amplitude from the set of response signals.

6. The method according to any one of claims 3 to 5, wherein measuring said background level comprises deriving the background level from the set of response signals.

7. The method according to any one of claims 1 to 6, wherein said modulation phase, said modulation amplitude and said background level are measured individually for each of said lock-in pixels and wherein said range information is individually computed for each of said lock-in pixels.

8. Range camera, configured to operate according to the time-of-flight principle, comprising
an illumination unit for illuminating a scene with intensity-modulated light;
an oscillator operatively connected to said illumination unit for feeding an oscillating modulation signal to said illumination unit;
an array of lock-in pixels;
an optical system for imaging said scene onto said array of lock-in pixels and causing light scattered in said scene to impinge on said lock-in pixels;

a driver module operatively connected to said array of lock-in pixels to control each lock-in pixel to integrate charge induced therein by said impinging light during at least a first, a second and a third time interval corresponding to at least a first, a second and a third phase of said modulation signal, respectively, and to provide a set of response signals containing at least a first, a second and a third response signal indicative of the charge integrated during the corresponding one of said at least first, second and third time intervals; and
a processing unit configured to derive a modulation phase, a modulation amplitude and a background level of the light impinging on each of said lock-in pixels based upon said set of response signals;
said processing unit being further configured to compute range information of said scene based upon said measured modulation phase and to output said computed range information;
said range camera being **characterised in that**
said processing unit is configured to determine a ratio between the background level and the modulation amplitude of the light detected at each lock-in pixel, to map said ratio onto a phase measurement error using a predetermined calibration function and to compensate for said phase measurement error in said computed range information.

9. The range camera according to claim 8, wherein said processing unit has said calibration function implemented therein as a look-up table function.

10. The range camera according to claim 8 or 9, wherein said driver module is configured to control each lock-in pixel to integrate charge induced therein by said impinging light during a first, a second, a third and a fourth time interval corresponding to a first, a second, a third and a fourth phase of said modulation signal, respectively, and to provide a set of response signals containing said first, second, third and fourth response signal.

11. The range camera according to claim 10, wherein said first, second, third and fourth phases satisfy the relationship:

$$\varphi_3 = \varphi_2 + \pi/2 = \varphi_1 + \pi = \varphi_0 + 3\pi/2$$

where $\varphi_0$, $\varphi_1$, $\varphi_2$ and $\varphi_3$ represent said first, second, third and fourth phase in radians, respectively;
wherein said processing unit is configured to derive the modulation phase from the set of response signals based upon a relationship expressible as:

$$\varphi = \mathrm{atan2}\left(A3 - A1, A2 - A0\right)$$

where $\varphi$ represents said modulation phase, and where A0, A1, A2 and A3 represent said first, second, third and fourth response signal, respectively.

12. The range camera according to any one of claims 8 to 11, wherein said processing unit is configured to derive said modulation amplitude from the set of response signals.

13. The range camera according to any one of claims 8 to 12, wherein said processing unit is configured to derive said background level from the set of response signals.

14. The range camera according to any one of claims 8 to 13, wherein said processing unit is configured to compute said range information for each of said lock-in pixels individually.

## Fig. 1 (Prior Art)

## Fig. 2

**Fig. 3**

**Fig. 4**

Europäisches
Patentamt
European
Patent Office
Office européen
des brevets

**EUROPEAN SEARCH REPORT**

Application Number

EP 09 16 4260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LINDNER M ET AL: "Calibration of the intensity-related distance error of the PMD TOF-camera" PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, vol. 6764, no. 1, 9 September 2007 (2007-09-09), pages 67640W-1, XP002560076 ISSN: 0277-786X * sections 1, 2, 3, 4.2 * ----- | 1-14 | INV. G01S7/497 G01S17/89 |
| A | RADMER J ET AL: "Incident light related distance error study and calibration of the PMD-range imaging camera" COMPUTER VISION AND PATTERN RECOGNITION WORKSHOPS, 2008. CVPR WORKSHOPS 2008. IEEE COMPUTER SOCIETY CONFERENCE ON, IEEE, PISCATAWAY, NJ, USA, 23 June 2008 (2008-06-23), pages 1-6, XP031285724 ISBN: 978-1-4244-2339-2 * abstract * * sections 2, 4, 5, 6 * ----- | 1-14 | |
| A | PAYNE A D ET AL: "Characterization of modulated time-of-flight range image sensors" PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, vol. 7239, 19 January 2009 (2009-01-19), XP002560077 ISSN: 0277-786X * abstract * * section 2 * ----- -/-- | 1-14 | TECHNICAL FIELDS SEARCHED (IPC)<br><br>G01S |

The present search report has been drawn up for all claims

| Place of search | Date of completion of the search | Examiner |
|---|---|---|
| Munich | 11 December 2009 | Grübl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 09 16 4260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KAHLMANN ET AL: "Calibration and development for increased accuracy of 3D range imaging cameras" JOURNAL OF APPLIED GEODESY,, vol. 2, no. 1, 1 January 2008 (2008-01-01), pages 1-11, XP007909326 ISSN: 1862-9016 * abstract * | 1-14 | |
| A | FUCHS S ET AL: "Extrinsic and depth calibration of ToF-cameras" COMPUTER VISION AND PATTERN RECOGNITION, 2008. CVPR 2008. IEEE CONFERENCE ON, IEEE, PISCATAWAY, NJ, USA, 23 June 2008 (2008-06-23), pages 1-6, XP031297386 ISBN: 978-1-4244-2242-5 * sections 1, 3 * | 1-14 | |
| A,D | WO 2006/097406 A2 (IEE SARL [LU]; LAMESCH LAURENT [LU]) 21 September 2006 (2006-09-21) * the whole document * | 1-14 | TECHNICAL FIELDS SEARCHED (IPC) |
| A | US 2007/146682 A1 (TACHINO YOSHIHIDE [JP] ET AL) 28 June 2007 (2007-06-28) * abstract * * paragraph [0011] * | 1-14 | |

The present search report has been drawn up for all claims

| Place of search | Date of completion of the search | Examiner |
|---|---|---|
| Munich | 11 December 2009 | Grübl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 275 833 A1**

**ANNEX TO THE EUROPEAN SEARCH REPORT
ON EUROPEAN PATENT APPLICATION NO.**

EP 09 16 4260

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2009

| Patent document cited in search report | | Publication date | Patent family member(s) | | Publication date |
|---|---|---|---|---|---|
| WO 2006097406 | A2 | 21-09-2006 | CN | 101142822 A | 12-03-2008 |
| | | | EP | 1703741 A1 | 20-09-2006 |
| | | | JP | 2008533478 T | 21-08-2008 |
| | | | US | 2008180650 A1 | 31-07-2008 |
| US 2007146682 | A1 | 28-06-2007 | JP | 2007170856 A | 05-07-2007 |

EPO FORM P0459

For more details about this annex : see Official Journal of the European Patent Office, No. 12/82

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1152261 A1, Lange and Seitz
- WO 9810255 A, Schwarte
- WO 2007014818 A1
- WO 2006097406 A2
- WO 2006056530 A1
- WO 2008034738 A1